# EUROPEAN PATENT APPLICATION

(11) **EP 4 257 855 A1**
(43) Date of publication of application: **11.10.2023**
(21) Application number: 23166746.0
(22) Date of filing: 05.04.2023
(51) Int. Cl.: F16K 11/20, F16K 11/00, F16K 31/53

(54) **FAUCET WATERWAY ASSEMBLY WITH MECHANICAL TRANSMISSION DEVICE BETWEEN HANDLE INTERFACE AND VALVE**

(30) Priority: 06.04.2022 US 202263328141 P
(71) Applicant: AS America, Inc., Piscataway, NJ 08854 (US)
(72) Inventor: Johnson, Paul Anthony, Columbia, 21044 (US)
(74) Representative: Altmann Stößel Dick Patentanwälte PartG mbB

(57) **Abstract**

A faucet waterway assembly (100) is provided having a housing comprising a first valve for controlling flow of hot water and second valve for controlling flow of cold water. A first handle interface (110a) is configured to attach to a first handle for controlling the first valve and to rotate about a first axis of rotation that is spaced apart from the housing. A first mechanical transmission device (112a) is provided coupled to the first handle interface (110a) and coupled to the first valve, wherein rotation of the first handle interface (110a) about the first axis of rotation causes the mechanical transmission device (112a) to cause rotation of the first valve about a second axis of rotation to control the flow of hot water. A second handle interface (110b) for controlling the second valve is provided, along with a corresponding second mechanical transmission device (112b) for coupling the second handle interface (110b) to the second valve.

## Description

### CROSS-REFERENCE TO RELATED APPLICATIONS

This application claims the priority of U.S. Provisional Application No. 63/328,141, filed April 6, 2022, the entire contents of which is incorporated herein by reference.

### FIELD

This relates generally to faucet waterways, and, more specifically, to faucet waterway assemblies having a mechanical transmission device between a faucet valve and a faucet handle interface.

### BACKGROUND

In conventional two-handle faucet waterway assemblies, a faucet body for distributing hot, cold, and/or mixed water is located at the center of the assembly. A rotatable handle for controlling a hot water valve is located to one side of the faucet body, and a rotatable handle for controlling a cold water valve s located to the other side of the faucet body. Rotating either of the handles causes rotation of a corresponding valves, which is positioned proximate to the handle such that the axis of rotation of the handle is aligned with the axis of rotation of the corresponding valve. The handles are each, that is, directly coupled to the valve which they control. Rotation of the valve opens the coupled valve to allow water to flow therethrough, and water passing through the valve then travels from the valve, through a hose, to the faucet body, where it passes through the faucet body and is distributed into the sink or basin.

### SUMMARY

As described above, known two-handle faucet waterway assemblies comprise rotatable handles that are spaced apart from a central faucet body. Hot and cold water supply lines are routed to a hot water control valve and a cold water control valve, respectively. Each of the control valves are positioned proximate to and coupled directly to one of the respective handles, such that an axis of rotation the handle aligns with an axis of rotation of the respective valve. After water passes through the valve under control of the respective faucet handle, the water flows from the valve to the central faucet body, is optionally mixed with water flowing from the other valve, and then flows through the faucet body and is distributed into the sink or basin.

However, known two-handle faucet assemblies have several shortcomings. In particular, the requirement that each of the flow control valves (the hot water valve and the cold water valve) be positioned proximate to the respective flow control handle such that the axis of rotation of the handle is aligned with the axis of rotation of the valve, makes installation of the faucet waterway assembly difficult and cumbersome. Such arrangements require extensive tubing such that water can flow between the valves and the centrally-located faucet body, they are complex to manufacture, and they are difficult to install. Accordingly, there is a need for improved two-handle faucet assemblies that provide more flexibility in arrangement, are less complex (e.g., do not require extensive tubing), are more affordable, and are easier to install. Disclosed herein are faucet assemblies that may address one or more of the above-identified needs.

As disclosed herein, a faucet waterway assembly may include a hot water valve and a cold water valve that are located in a first location, such as by being disposed in a central hub or housing. The faucet waterway assembly may include a hot water handle interface and a cold water handle interface that are each spaced apart from the first location. For example, while the hot water valve and the cold water valve may be disposed in a central hub at the base of a faucet neck, the handle interfaces may be located to either side of the central hub, spaced apart from the central hub by a number of inches (or any suitable distance). Each of the hot water handle interface and the cold water handle interface may be configured to rotate about a respective axis of rotation that does not intersect the central hub or the valves disposed therein. Thus, the faucet waterway assembly may differ from conventional faucet waterway assemblies in which handle interfaces are configured to rotate about an axis of rotation that is aligned with an axis of rotation of a corresponding valve such that the handle is directly coupled to the valve and rotation of the handle causes the same rotation, about the same axis, of the valve. Instead, in some embodiments disclosed herein, because the valves may be spaced apart from the handle interfaces, each handle interface may be coupled to its respective valve by a respective mechanical transmission device. The mechanical transmission device may include any one or more of the following: one or more gear trains, one or more pinned rods, one or more belts, one or more chains, one or more pulleys, one or more four-bar linkages, one or more flexure devices, and one or more rack and pinion sets. Thus, when a user rotates a handle and its attached handle interface about a first axis of rotation, rotation of the handle interface may actuate the mechanical transmission device to which it is coupled, and the mechanical transmission device may in turn actuate the valve to which it is coupled, thereby causing rotation of the valve about a second axis of rotation distinct from the first axis of rotation.

By using a mechanical transmission device to transfer motion of a faucet handle interface to a valve that is spaced apart from the faucet handle interface, a faucet assembly may be provided without requiring that the handle be located proximate to (or aligned with) a central hub, housing, or body of the faucet. Furthermore, the need to mount valves proximate to the faucet handles may be obviated, thereby allowing for faucet assemblies to be installed without the need to run supply lines to the location at which the handle itself is mounted. Thus, increased flexibility in arrangements may be afforded, use of extensive under-deck hosing may be avoided, complexity and costs may be reduced, and installation may be simplified.

In some embodiments, a faucet waterway assembly is provided, comprising: a housing comprising a first valve for controlling flow of hot water and second valve for controlling flow of cold water; a first handle interface configured to attach to a first handle for controlling the first valve, wherein the first handle interface is configured to rotate about a first axis of rotation that is spaced apart from the housing; a first mechanical transmission device coupled to the first handle interface and coupled to the first valve, wherein rotation of the first handle interface about the first axis of rotation causes the mechanical transmission device to cause rotation of the first valve about a second axis of rotation to control the flow of hot water; a second handle interface configured to attach to a second handle for controlling the second valve, wherein the second handle interface is configured to rotate about a third axis of rotation that is spaced apart from the housing; and a second mechanical transmission device coupled to the second handle interface and coupled to the second valve, wherein rotation of the second handle interface about the third axis of rotation causes the mechanical transmission device to cause rotation of the second valve about a fourth axis of rotation to control the flow of cold water.

In some embodiments, the first mechanical transmission device comprises one or more selected from: one or more gear trains, one or more pinned rods, one or more belts, one or more chains, one or more pulleys, one or more four-bar linkages, one or more flexure devices, and one or more rack and pinion sets.

In some embodiments, the first mechanical transmission device comprises a gear train comprising a first gear coupled to the first handle interface and a second gear coupled to the first valve.

In some embodiments, the first gear rotates in a first plane and the second gear rotates in a second plane parallel to the first plane.

In some embodiments, the first gear and the second gear are coupled to one another by a third gear that rotates in a plane that is angled with respect to the first plane and the second plane.

In some embodiments, the second gear rotates in both the first plane and the second plane.

In some embodiments, one or both of the first gear and the second gear are a gear section configured to rotate through a maximum rotational angle of 90 degrees or less.

In some embodiments, the assembly comprises a stop configured to limit rotation of the first handle interface.

In some embodiments, the first handle interface and the housing are both configured to be mounted on a top side of a deck, and wherein the first mechanical transmission device is configured to be positioned on the top side of the deck.

In some embodiments, a portion of the first handle interface protrudes below a lowermost extent of the first mechanical transmission device and is configured to extend into a hole in the deck.

In some embodiments, the first handle interface and the housing are both configured to be mounted on a top side of a deck, and wherein the first mechanical transmission device is configured to be positioned on a bottom side of the deck.

In some embodiments, a portion of the first handle interface is configured to protrude through a hole in the deck and is coupled to the first mechanical transmission device below the hole in the deck.

In some embodiments, the first mechanical transmission device is configured such that rotation of the first handle interface about the first axis of rotation by a first angular extent causes rotation of the first valve about the second axis of rotation by a second angular extent, wherein the first angular extent is not equal to the second angular extent.

In some embodiments, the first valve is configured to be mounted above a deck on which the faucet waterway assembly is mounted.

In some embodiments, the first valve is configured to be mounted at least partially below a deck on which the faucet waterway assembly is mounted.

Any one or more characteristics of any of the above embodiments may be combined, in whole or in part, with one another and/or with any one or more characteristics of any other embodiment(s) described herein.

### BRIEF DESCRIPTION OF THE DRAWINGS

The invention will now be described, by way of example only, with reference to the accompanying drawings, in which:
FIG. 1 shows a schematic view of a faucet waterway assembly, in accordance with some embodiments.
FIGS. 2A-2B show gear trains, in accordance with some embodiments.
FIGS. 3A-3C show various views of a faucet waterway assembly, in accordance with some embodiments.

### DETAILED DESCRIPTION

As explained above, there is a need for improved two-handle faucet assemblies that provide more flexibility in arrangement, are less complex (e.g., do not require extensive tubing), are more affordable, and are easier to install. Accordingly, provided herein are faucet waterway systems that may address one or more of the above-identified needs.

A faucet waterway assembly for a two-handle faucet is provided, in which a hot water valve and a cold water valve are each spaced apart from handle interfaces for the respective valves, and in which respective axes of rotation of the handle interfaces are not aligned with axes of rotation of the respective corresponding valve. Thus, rather than being positioned proximate to and/or in rotational alignment with a valve to be controlled, a faucet handle may be disposed anywhere, and a mechanical transmission device may transfer motion of the handle (and handle interface) to the valve to be controlled. For example, in some embodiments, a gear train may be used such that rotational motion about a first axis of rotation of a faucet handle is transferred to a corresponding valve, causing the valve to rotate about a second axis of rotation.

The use of a mechanical transmission device to operably couple a handle interface to a valve may allow, as explained herein, greater flexibility in spatial arrangements, greater functionality, and improved simplicity in faucet waterway arrangements. For example, both a hot water control valve and a cold water control valve may be positioned centrally in a faucet waterway, for example by being located in a central hub/housing that is aligned with a faucet neck. The faucet handles may be spaced apart from the central hub, for example by being positioned several inches to either side of the faucet neck. The mechanical transmission devices may be used to transfer motion of the handles to the hub, thereby allowing a user to control rotation of the valves by rotating the faucet handles.

In this way, the centrally-located valves may be controlled by handles that are themselves spaced apart from the valves by any arbitrary distance, rather than requiring that handles and valves be positioned proximate to and/or in rotational alignment with one another. This arrangement obviates the need for hosing to be used to direct the flow of water out toward the handles and then back toward the faucet neck; instead, both valves may be positioned centrally in the hub, and supply hoses may be arranged in a compact arrangement directly beneath the hub and faucet neck. Thus, the faucet waterways disclosed herein may reduce complexity and costs, and may improve ease and simplicity of installation.

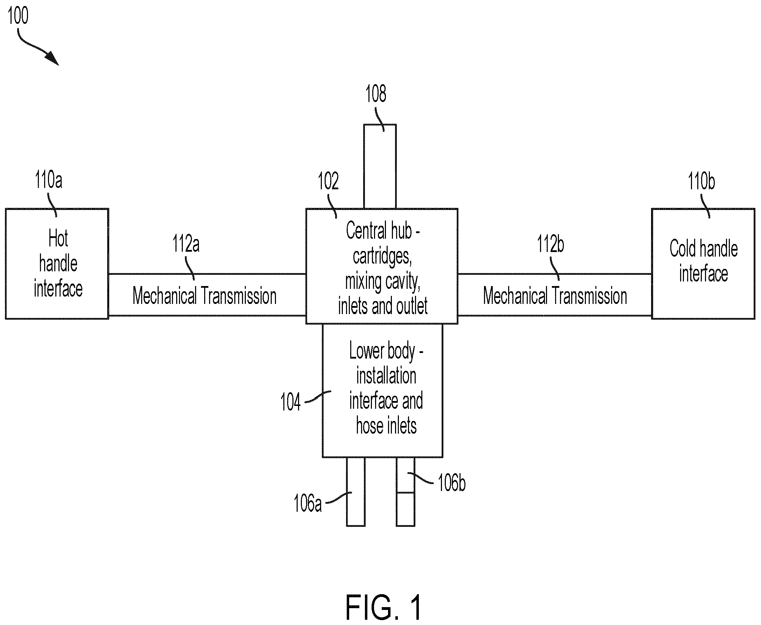

FIG. 1 shows a schematic view of faucet waterway assembly 100, in accordance with some embodiments. As shown, faucet waterway assembly may include hub 102, lower body portion 104, hot water supply hose 106a, cold water supply hose 106b, mixed water outlet hose 108, hot water handle interface 1 10a, cold water handle interface 1 10b, hot water mechanical transmission 112a, and cold water mechanical transmission 112b. Faucet waterway assembly 100 may be configured to be provided as part of a two-handle faucet assembly, for example be being mounted on top and or below a sink deck. Faucet waterway assembly 100 may be configured such that it may be operable connected to a faucet body, faucet neck, and faucet handles. In operation, hot and cold water may enter faucet waterway assembly 100 through hot water supply hose 106a and cold water supply hose 106b, may optionally be mixed together in a mixing chamber, and may be outputted through mixed water supply hose 108 such that the mixed water may be dispensed into a sink or basin. As shown and described below in further detail, handle interfaces 110a and 110b of assembly 100 may be spaced apart from hub 102, and may be linked to hub 102 (and to valves provided therein) by mechanical transmission devices 112a and 112b, respectively.

In some embodiments, hot water and cold water may enter assembly 100 through hot water supply hose 106a and cold water supply hose 106b, respectively. The supply hoses 106 may flow into lower body portion 104, which may include respective inlets for each of the supply hoses 106.

Lower body portion 104 may, in some embodiments, be configured to be installed below a sink deck, and may be configured to mount to a bottom of the sink deck, to an upper body portion (not shown in FIG. 1), and/or to hub 102. The hot and cold water may flow into and/or through lower body portion 104 and may enter central hub 102.

Hub 102 may, in some embodiments, be configured to be installed above a sink deck, partially above and partially below a sink deck, or below a sink deck. Hub 102 may be configured to mount to a top and/or bottom of a sink deck, to an upper body portion (not shown in FIG. 1), and/or to hub 102. The hot and cold water may flow into hub 102 (e.g., via respective inlets) and may flow, respectively, to a hot water valve and a cold water valve (not shown in FIG 1) provided in hub 102. In some embodiments, hub 102 may include a housing or shell that encases an interior space of hub 102, and the hot water valve and cold water valve may be provided inside the interior space. The hot water valve and cold water valve may be configured to control (e.g., by selectively opening and closing) the amount of hot and cold water, respectively, that flows into a mixing chamber (not shown in FIG. 1) that may be provided in and/or as a part of hub 102. The water flowing from one or both of the valves may flow into and through the mixing chamber and may flow out of (e.g., via an outlet) hub 102 and into mixed water outlet hose 108.

Mixed water outlet hose may direct the flow of hot, cold, and/or mixed water that flowed through hub 102 to and/or through a faucet body and/or faucet neck.

In some embodiments, the hot water valve and cold water valve provided inside hub 102 may be too large to each fit, side-by-side, inside standard faucet hole opening formed in a sink deck. Hole sizes for a faucet hole opening may vary. In some embodiments, a faucet hole opening may be approximately 25mm in diameter. In some embodiments, a faucet hole opening may have a diameter of less than or equal to 20 mm, 25 mm, 30 mm, 35 mm, 40 mm, 45 mm, or 50 mm. In some embodiments, a faucet hole opening may have a diameter of greater than or equal to 20 mm, 25 mm, 30 mm, 35 mm, 40 mm, 45 mm, or 50 mm.

In such instances, it may be advantageous to provide hub 102 above (or at least partially above) the sink deck, such that the cartridges may sit side by side to one another without needing to extend down into or though the faucet hole opening in the deck. Hoses such as supply hoses 106 and/or hoses flowing from lower body portion 104 may then pass through the faucet hole opening in the deck, and may enter hub 102 above the deck such that the supply water can flow to the cartridges.

Alternatively, it may be advantageous to provide hub 102 below (or at least partially below) the sink deck, such that the cartridges may sit side by side to one another without needing to extend up into or though the faucet hole opening in the deck. Hoses such as mixed water outlet hose 108 may then pass up through the faucet hole opening in the deck, allowing mixed water flowing from hub 102 to enter a faucet body or faucet neck mounted on top of the deck.

Turning attention now to the handle interfaces 110 and mechanical transmission devices 112, FIG. 1 shows that handle interfaces 110 may be positioned such that they are each physically spaced apart from hub 102. Handle interfaces 110a and 110b may each be configured to be physically attached to a faucet handle, for example such that a user may rotate the faucet handle and cause the attached handle interface 110 to rotate accordingly. Handle interfaces 110 may in some embodiments be mounted on top of the sink deck. In some embodiments, handle interfaces 110 may extend at least partially into and/or through the sink deck, for example by extending into a faucet handle mounting hole provided in the sink deck. In some embodiments in which a handle interfaces 110 extend partially into the sink deck and a corresponding mechanical transmission device 112 is provided on top of the sink deck, the handle interfaces may extend below a lowermost extent of the mechanical transmission devices 112.

In some embodiments, handle interfaces 110 may be provided entirely above the sink deck, not extending into or through the sink deck, and instead being mounted to a component of faucet waterway assembly 100 itself, for example by being mounted to an upper body portion of assembly 100. Embodiments in which handle interfaces 110 do not extend into or through the sink deck may be advantageous in that they may allow for handles to be mounted in locations where a faucet handle hole is not present in the sink deck. In some embodiments, for example in which handle interfaces do not extend downward into or through the sink deck, another part of assembly 100 (e.g., an upper body portion and/or a portion of a handle interface 110) may extend down and into the sink deck (for example by extending down into an otherwise unused faucet handle hole, thereby helping to anchor assembly 100 in place and prevent rotation or translation of assembly 100 with respect to the sink deck.

In some embodiments, handle interfaces 110 may each be configured to rotate about a respective axis of rotation. The axes of rotation of the handle interfaces 110 may be positioned such that they do not intersect hub 102. Thus, the exes of rotation of the handle interfaces 110 may not intersect the valves positioned in hub 102. Therefore, rather than coupling directly to the valves to which the correspond, the handle interfaces 110 may instead be coupled to the valves in hub 102 via the respective mechanical transmission devices 112, such that rotation (or other actuation) of a handle interface 110 may cause the corresponding mechanical transmission device 112 to actuate the valve inside hub 102. A valve inside hub 102 may therefore be caused to rotate, to open or close the flow path through the valve, about an axis of rotation that is separate from the axis of rotation of the corresponding handle interface.

Mechanical transmission devices 112a and 112b may each be coupled to a respective handle interface (1 10a or 110b) and to a respective valve in hub 102. The mechanical transmission devices 112 may be configured to transfer motion (e.g., rotational motion) from the respective handle interface 110 to the respective valve, for example such that rotation of a handle interface 110 causes rotation of the corresponding valve. In some embodiments, one or both of the mechanical transmission devices 112a and 112b may include one or more of: one or more gear trains, one or more pinned rods, one or more belts, one or more chains, one or more four-bar linkages, one or more flexure devices, and one or more rack and pinion sets.

In some embodiments, a mechanical transmission device 112 may be mounted above the sink deck, for example being wholly or partially encased by an upper body portion of assembly 100. In some embodiments, a mechanical transmission device 112 may be mounted below the sink deck, for example being wholly or partially encased by lower body portion 104 of assembly 100. In some embodiments, a mechanical transmission device 112 may be mounted partially above and partially below the sink deck, and may in some embodiments extend through one or more holes or openings formed in the sink deck.

In some embodiments in which all or part of a mechanical transmission device 112 is mounted below the sink deck, at least a portion of a handle interface 110 and/or hub 102 to which the mechanical transmission device 112 is coupled may be provided below (e.g., partially and/or entirely below) the sink deck, such that the coupling to the mechanical transmission device 112 may be provided below the sink deck.

In some embodiments in which a central portion of a mechanical transmission device 112 is mounted below the sink deck, portions of the mechanical transmission device 112 located proximate to the corresponding handle interface 110 and/or portions of the mechanical transmission device 112 located proximate to hub 102 may extent upward and through the sink deck to couple with one or more components mounted above the sink deck. For example, a mechanical transmission device 112 may include a stepped gear-section that couples with one component below the sink deck and extends upward and through the sink deck to couple with another component above the sink deck.

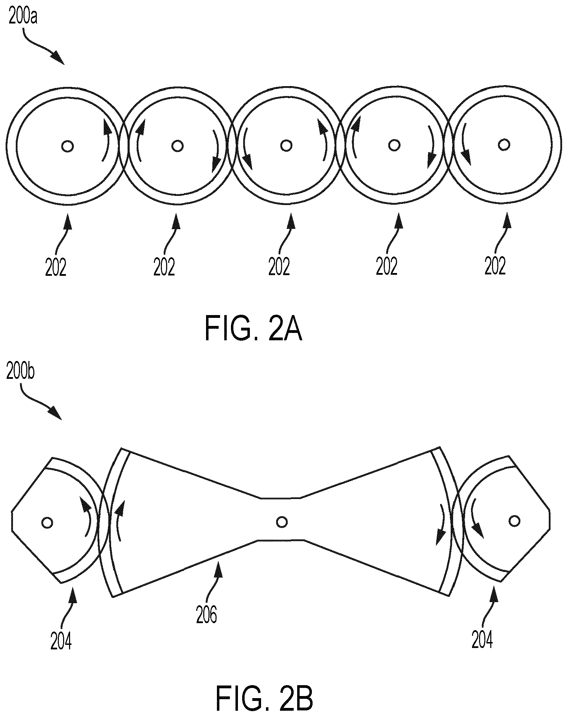

In some embodiments, one or both of mechanical transmission devices 112 may include one or more gear trains. Exemplary gear trains are shown in FIGS. 2A and 2B. As an illustration convention, gear teeth in FIGS. 2A and 2B are illustrated as concentric circles near the edge of the gears.

FIG. 2A shows a gear train 200a comprising five circular gears 202, each of which is a same size as one another.

FIG. 2B shows a gear train 200b comprising two one-sided gear sections 204 and two-sided gear section 206. In some embodiments, gear sections such as those shown in FIG. 2B may be able to be used in a faucet waterway assembly in which a faucet handle interface is configured to only be partially rotated (e.g., rotated by an extent less than 360 degrees). In these embodiments, use of gear sections may save space, reduce material costs, reduce the number of gears required to traverse a given distance, and/or increase simplicity of design.

In some embodiments, one or both of gear trains 200a and 200b, or any gear train having any of the features of one or both of gear trains 200a and 200b, may be included in one or both of mechanical transmission devices 112a and 112b.

In some embodiments, a gear train included in one or both of mechanical transmission devices 112 may be a stepped gear train, such that a first gear in the train rotates in a first plane and a second gear in the train rotates in a second plane that is parallel to the first plane. This arrangement may be provided in embodiments in which one or more gears in the train is a thick gear that extends vertically - e.g., in the direction perpendicular to one or more of the planes of rotation - to extend toward and/or to one or both of the different planes of rotation. Additionally or alternatively, this arrangement may be provided in embodiments in which two parallel gears in the gear train are joined by one or more gears that rotates in a perpendicular plane, by one or more gears that rotates in a diagonal plane, and/or by one or more additional mechanical transmission devices or portions thereof (e.g., chains, belts, rods, pulleys, or the like).

In some embodiments, a mechanical transmission device 112 (including, e.g., a gear train) may be stepped upward and/or downward and/or may be provided at an angle (e.g., diagonally) with respect to the deck.

In some embodiments, a gear train included in one or both of mechanical transmission devices 112 may include one or more gears configured to provide reduction and/or magnification of rotation. For example, by using one or more gears of different sizes in a gear train, the gear train may be configured such that rotation of a handle interface to which the gear train is coupled through a first angular extent may cause rotation of a valve to which the gear train is coupled through a second angular extent, wherein the second angular extent may be greater than the first angular extent or may be less than the first angular extent. In this way, a gear train in a mechanical transmission device may be leveraged to allow for large rotations and/or subtle rotations of a valve to be easily provided with standard rotation of a faucet handle by a user.

In some embodiments, a mechanical transmission device coupling a handle interface to a valve may use one or more alternate or additional mechanical transmission components, such as chains, belts, rods, pulleys, or the like, to introduce reduction or magnification to the extent to which a faucet handle is rotated or otherwise actuated.

In some embodiments, faucet waterway assembly 100 may include one or more rotation stops, which may be provided in any suitable location to prevent rotation or other actuation of a faucet handle, handle interface device (110a or 110b), and/or component of a mechanical transmission device (112a or 112b) beyond a predefined operable range. Use of stops in this manner may prevent inadvertent damage to faucet waterway assembly 100, for example by preventing damage to the mechanical transmission device (112a or 112b), in cases in which a user inadvertently attempts to rotate or otherwise actuate a faucet handle beyond an operable range.

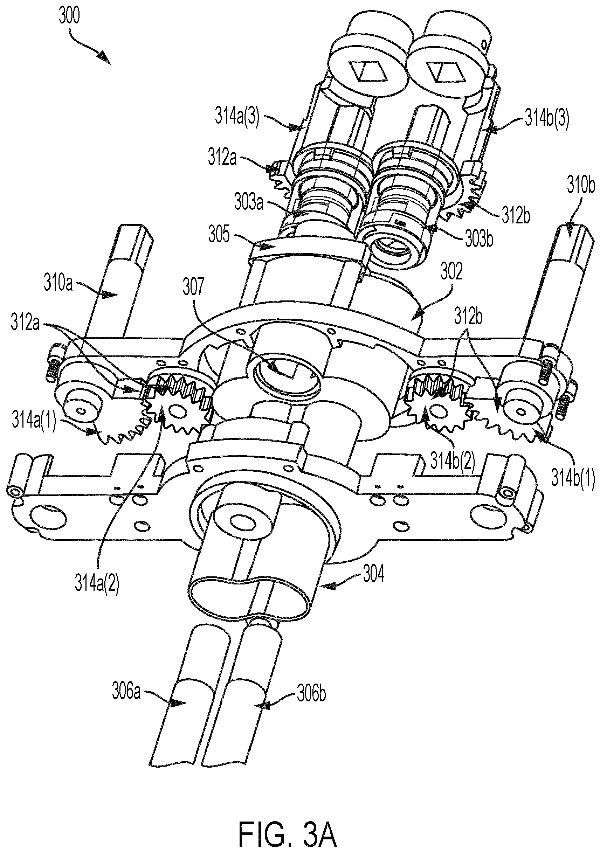

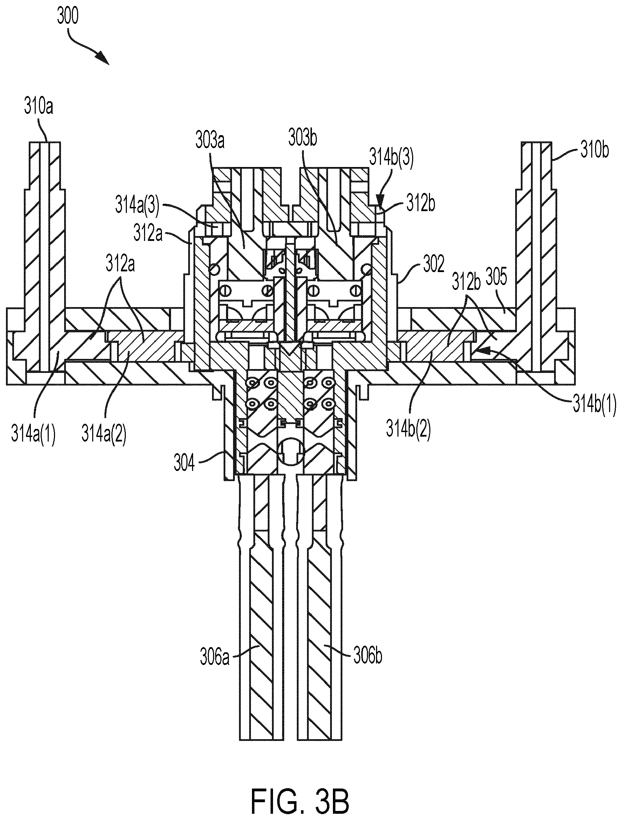

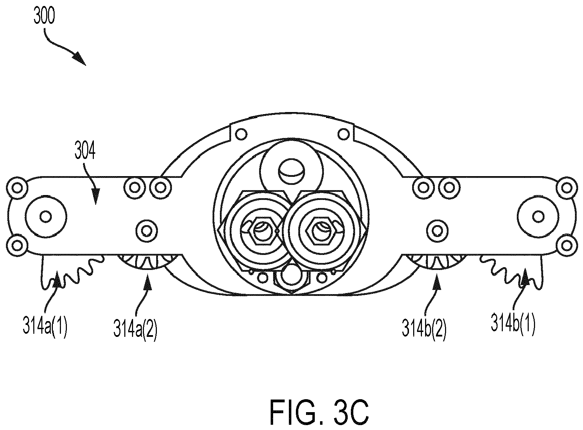

FIGS. 3A-3C show various views of faucet waterway assembly 300, in accordance with some embodiments. FIG. 3A shows an exploded perspective view of faucet waterway assembly 300; FIG. 3B shows a cross-sectional side view of faucet waterway assembly 300; and FIG. 3C shows a bottom view of faucet waterway assembly 300. In some embodiments, faucet waterway assembly 300 and its components may share any one or more characteristics in common with faucet water assembly 100 and its corresponding components.

As shown in FIGS. 3A-3C, faucet waterway assembly 300 may include hub 302, hot water valve 303a, cold water valve 303b, lower body portion 304, upper body portion 305, hot water supply hose 306a, cold water supply hose 306b, mixing chamber 307, hot water handle interface 310a, cold water handle interface 310b, hot water mechanical transmission device 312a, and cold water mechanical transmission device 312b.

In some embodiments, faucet waterway assembly 300 may be configured to be mounted on top of a sink deck, with the lower portion of lower body portion 304 extending through a faucet hole in the sink deck. As shown, supply hoses 306a may extend into the lower portion of lower body portion 304. The lower portion of lower body portion 304 may be sufficiently narrow such that it can extend through a standard-sized faucet hole in the sink deck, whereas the side-by-side valves 303a and 303b (alone and/or in combination with hub 302 in which they are disposed) may be too wide to fit inside a standard-sized faucet hole in the sink deck.

(In some embodiments, a faucet hole may be sufficiently large and/or valves may be sufficiently small that the valves and/or hub can fit into the faucet hole. In some such embodiments, a faucet waterway may be configured such that the hub and valves are located partially within and/or below the sink deck, extending through the opening.)

In some embodiments, a central portion of hub 302 that contains valves 303a and 303b may be configured to be mounted on top of the sink deck. In some embodiments, lower body portion 304 may include a planar portion that sits atop the sink deck and extends from the central faucet hole outward in each direction toward the location at which rotatable handle interfaces 310 are mounted. The central portion of hub 302 may sit atop lower body portion 304, such that it is positioned above the sink deck and there is not a need for valves 303a and 303b to extend into or through the sink deck.

As shown in FIG. 3A, hub 302 may include mixing chamber 307, which may receive flow of water from one or both of valves 303a and 303b, allowing water to mix therein, such that a flow of mixed water may flow out of mixing chamber 307 and into an outlet of faucet waterway assembly 300.

As shown in FIG. 3A, upper body portion 305 may be configured to attach to lower body portion 304 by mounting to the top of lower body portion 304, and may be attached by one or more screws. When upper body portion 305 is mounted to the top of lower body portion 304, a space between the two portions may be formed in which all or part of the mechanical transmission devices 312 may be disposed.

In the example shown, hot water mechanical transmission 312a and cold water mechanical transmission 312b are symmetrical gear trains. Hot water mechanical transmission device 312a includes hot water outer gear 314a(1), hot water middle gear 314a(2), and hot water inner gear 314a(3). Cold water mechanical transmission 312b includes cold water outer gear 314b(1), cold water middle gear 314b(2), and cold water inner gear 314b(3). Specific characteristics are described below with respect to hot water mechanical transmission device 312a, though cold water mechanical transmission device 312b may have any one or more same or similar characteristics.

As shown in FIG. 3A, hot water handle interface 310a may include a vertically extending rod that may be configured to be coupled directly to a hot water faucet handle, such that rotation of the hot water faucet handle may cause equivalent rotation of hot water handle interface 310a. As shown, hot water handle interface 310a may be configured to rotate about a first axis of rotation, which may be an axis of rotation that is oriented perpendicular to the sink deck and that extends down through hot water outer gear 314a(1).

Hot water outer gear 314a(1) may be coupled to (or formed integrally as a part of) hot water handle interface 310a, such that hot water outer gear 314a(1) may rotate about the same axis of rotation as hot water handle interface 310a. In the embodiment shown, hot water outer gear 314a(1) may be a flat gear section allowing for operative rotation of about 90 degrees.

Hot water outer gear 314a(1) may be coupled to hot water middle gear 314a(2), such that rotation of hot water outer gear 314a(1) may drive corresponding rotation of hot water middle gear 314a(2). In the embodiment shown, hot water middle gear 314a(2) may be a flat circular gear that rotates in a same rotational plane as hot water outer gear 314a(1).

Hot water middle gear 314a(2) may be coupled to hot water inner gear 314a(3), such that rotation of hot water middle gear 314a(2) may drive corresponding rotation of hot water inner gear 314a(3). In the embodiment shown, hot water inner gear 314a(3) may be a stepped gear section that includes a portion comprising a partial-circular section of gear teeth configured to engage with hot water middle gear 314a(2) in the same plane of rotation as hot water middle gear 314a(2). Hot water inner gear 314a(3) may then include a vertically extending portion that may be formed in the shape of a portion of a cylinder wall, wrapping around an outer wall of hub 302 such that it may rotate around said outer wall of hub 302. The vertically extending portion of hot water inner gear 314a(3) may extend upwards to join to a top portion of water inner gear 314a(3), and the top portion may be configured to extend over the top of and engage with a portion of hot water valve 303a. The top portion may be configured to rotate in a rotational plane that is separate from the rotational plane of hot water outer gear 314a(1) and hot water middle gear 314a(2). Furthermore, the axis of rotation of hot water inner gear 314a(3) may be aligned with an axis of rotation of hot water valve 303a, to which its top portion may be engaged. Thus, rotation of hot water inner gear 314a(3) may drive corresponding rotation of hot water valve 303a.

In the arrangement described, rotation of hot water handle interface 310a may thus drive rotation, via mechanical transmission device 312a, of hot water valve 303a.

In some embodiments of faucet waterway assemblies as described herein, components of a hot water mechanical transmission may be provided in a same housing as components of a cold water mechanical transmission. Use of a single housing may increase strength, stability, and ease of installation. In some embodiments, components of a hot water mechanical transmission may be provided in a separate housing from components of a cold water mechanical transmission. Use of separate housings may afford increased flexibility in physical arrangement and installation options.

In some embodiments, any of the components of faucet waterways described herein may be formed of any suitable materials, including for example polymers, plastics, rubbers, metals, and/or ceramics. In some embodiments, any of the components of faucet waterways described herein may be assembled and attached to one another using any suitable methods, including for example use of screws, bolts, rivets, crimping, latching, clips, over-molding, insert-molding, gluing, potting, welding, soldering, brazing, adhesives, adhesive tapes, and/or friction.

In some embodiments, faucet waterway assemblies as described herein may be fixed to a sink deck using one or more friction washers, double-sided tape, adhesives, rubber putty plates, and/or caulking. Additionally or alternatively, faucet waterway assemblies as described herein may be held in place with respect to a sink deck by one or more components of the faucet waterway that may extend through one or more holes or openings in the sink deck, for example by extending through a central faucet hole and/or by extending through one or more distal faucet handle holes. Even though faucet handle holes may not be required for connecting a faucet handle directly to a valve or to associated hosing, the holes may still be used to help to anchor a faucet waterway assembly in place. In some embodiments, a protrusion from a faucet waterway assembly that extends into or through a faucet hole or faucet handle hole may attach to a component on the other side of the deck, thereby holding the faucet waterway assembly in place and preventing it from being removed from the deck.

In some embodiments, for supply water connection, one or more flexible supply hoses, rigid tubes, and/or shorter stems may be attached to the faucet. In some embodiments, one or more connections to the faucet may be achieved by capturing between faucet parts, screwing, and/or clipping to the faucet waterway assembly or its housings described herein. In some embodiments, elements may be installed in the product as sold, or may be installed at installation, whether provided with the product or provided separately.

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims. Finally, the entire disclosure of the patents and publications referred to in this application are hereby incorporated herein by reference.

## Claims

1. A faucet waterway assembly (100; 300) comprising:
a housing comprising a first valve (303a) for controlling flow of hot water and second valve (303b) for controlling flow of cold water;
a first handle interface (1 10a; 310a) configured to attach to a first handle for controlling the first valve (303a), wherein the first handle interface (1 10a; 310a) is configured to rotate about a first axis of rotation that is spaced apart from the housing;
a first mechanical transmission device (112a; 312a) coupled to the first handle interface (110a; 310a) and coupled to the first valve (303a), wherein rotation of the first handle interface (110a; 310a) about the first axis of rotation causes the mechanical transmission device (112a; 312a) to cause rotation of the first valve (303a) about a second axis of rotation to control the flow of hot water;
a second handle interface (1 10b; 310b) configured to attach to a second handle for controlling the second valve (303b), wherein the second handle interface (1 10b; 310b) is configured to rotate about a third axis of rotation that is spaced apart from the housing; and
a second mechanical transmission device (112b; 312b) coupled to the second handle interface (1 10b; 310b) and coupled to the second valve (303b), wherein rotation of the second handle interface (1 10b; 310b) about the third axis of rotation causes the mechanical transmission device (112b; 312b) to cause rotation of the second valve (303b) about a fourth axis of rotation to control the flow of cold water.

2. The faucet waterway assembly (100; 300) of claim 1, wherein the first mechanical transmission device (112a; 312a) comprises one or more selected from: one or more gear trains (220a, 200b), one or more pinned rods, one or more belts, one or more chains, one or more pulleys, one or more four-bar linkages, one or more flexure devices, and one or more rack and pinion sets.

3. The faucet waterway assembly (100; 300) of claim 1 or 2, wherein the first mechanical transmission device (112a; 312a) comprises a gear train (220a, 200b) comprising a first gear (314a(1)) coupled to the first handle interface (110a; 310a) and a second gear (314a(3)) coupled to the first valve (303a).

4. The faucet waterway assembly (100; 300) of claim 3, wherein the first gear (314a(1)) rotates in a first plane and the second gear (314a(3)) rotates in a second plane parallel to the first plane.

5. The faucet waterway assembly (100; 300) of claim 4, wherein the first gear and the second gear are coupled to one another by a third gear that rotates in a plane that is angled with respect to the first plane and the second plane.

6. The faucet waterway assembly (100; 300) of claim 4, wherein the second gear (314a(3)) rotates in both the first plane and the second plane.

7. The faucet waterway assembly (100; 300) of claim 3, wherein one or both of the first gear (314a(1)) and the second gear (314a(3)) are a gear section configured to rotate through a maximum rotational angle of 90 degrees or less.

8. The faucet waterway assembly (100; 300) of any one of claims 1 to 7, comprising a stop configured to limit rotation of the first handle interface (1 10a; 310a).

9. The faucet waterway assembly of any one of claims 1 to 8, wherein the first handle interface (1 10a; 310a) and the housing are both configured to be mounted on a top side of a deck, and wherein the first mechanical transmission device (112a; 312a) is configured to be positioned on the top side of the deck.

10. The faucet waterway assembly (100; 300) of claim 9, wherein a portion of the first handle interface (110a; 310a) protrudes below a lowermost extent of the first mechanical transmission device (112a; 312a) and is configured to extend into a hole in the deck.

11. The faucet waterway assembly (100; 300) of any one of claims 1 to 8, wherein the first handle interface (1 10a; 310a) and the housing are both configured to be mounted on a top side of a deck, and wherein the first mechanical transmission device (112a; 312a) is configured to be positioned on a bottom side of the deck.

12. The faucet waterway assembly (100; 300) of claim 11, wherein a portion of the first handle interface (110a; 310a) is configured to protrude through a hole in the deck and is coupled to the first mechanical transmission device (112a; 312a) below the hole in the deck.

13. The faucet waterway assembly (100; 300) of any one of claims 1 to 12, wherein the first mechanical transmission device (112a; 312a) is configured such that rotation of the first handle interface (1 10a; 310a) about the first axis of rotation by a first angular extent causes rotation of the first valve (303a) about the second axis of rotation by a second angular extent, wherein the first angular extent is not equal to the second angular extent.

14. The faucet waterway assembly (100; 300) of any one of claims 1 to 13, wherein the first valve (303a) is configured to be mounted above a deck on which the faucet waterway assembly (100; 300) is mounted.

15. The faucet waterway assembly (100; 300) of any one of claims 1 to 13, wherein the first valve (303a) is configured to be mounted at least partially below a deck on which the faucet waterway assembly (100; 300) is mounted.
